# EUROPEAN PATENT APPLICATION

(11) **EP 3 142 090 A1**
(43) Date of publication of application: **15.03.2017**
(21) Application number: 15788771.2
(22) Date of filing: 03.04.2015
(51) Int. Cl.: G08B 25/04, G01C 21/26, G08B 25/10, G08G 1/005, H04M 3/42

(54) **POSITION INFORMATION NOTIFICATION SYSTEM**

(30) Priority: 07.05.2014 JP 2014095941
(71) Applicant: OTTA INC., Fukuoka-shi, Fukuoka 810-0001 (JP)
(72) Inventor: YAMAMOTO, Fumikazu, Hiroshima-shi, Hiroshima 730-0051 (JP)
(74) Representative: Hoffmann Eitle
(86) International application number: PCT/JP2015/060593
(87) International publication number: WO 2015/170538

(57) **Abstract**

[Problem] To provide a system to keep a watch on the movement of a ward.

[Solution] A position information notification system (1) of the present invention includes a short-range wireless communication device (2) that includes identification information but does not include position information, base station terminals (3a, 3b) capable of acquiring position information based on a signal from a GPS satellite, and a management server (4) in which the information transmitted from the base station terminals (3a, 3b) is registered. The base station terminals (3a, 3b) include a search means that searches the short-range wireless communication device (2) that is capable of communicating, and determines whether the device was detected, and a detection time means that is executed when the short-range wireless communication device (2) is detected by the search means.

[Effect] The detection time means transmits, by acquiring the identification information from the short-range wireless communication device (2) and the position information based on the signal from the GPS satellite, the information to the management server (5). Accordingly, the position information of the ward can be notified without using a costly device such as a smartphone.

## Description

### [Technical Field]

The present invention relates to a position information notification system capable of notifying on a smartphone and the like of a guardian position information till a child who, for example, attends a school or cram school, arrives at a destination.

### [Background Art]

Guardians having a child who attends an elementary school are worried whether their child has safely reached the school, or a cram school, and is safely returning home without meeting an accident.

Conventionally, for example, in Patent Document 1, an attendance record management system that includes an IC card reading means that reads information such as a student ID number recorded in an IC chip in an IC card, and based on the read information such as the student ID number, notifies an attendance record of the student via an email to a specified email address is proposed.

Moreover, conventionally, for example, a system that automatically transmits, when a child who is carrying an IC tag passes through the school gate, school gate passing information to their guardian via an email is in use (Non-Patent Document 1, "Mimamorume" (a registered trademark)).

However, in the system proposed in Patent Document 1, because the IC card reading means is installed in a classroom, the guardian can confirm that the child has reached or left the classroom, but cannot confirm position information of the child when commuting to and from the school. The system disclosed in Non-Patent Document 1 in which a sensor that detects the IC tag information is installed at the school gate has the same problem. That is, in the system disclosed in Non-Patent Document 1, it can be confirmed that the child has passed through the school gate, but the position of the child when commuting to and from the school cannot be confirmed.

In recent years, high-function mobile phones generally referred to as smartphones (hereinafter referred to as "smartphone") have become popular. Such a smartphone allows acquiring position information from a GPS. Therefore, if it can be assumed that a ward is carrying the smartphone, a system in which a smartphone of the guardian is notified of the position information of the ward can be provided. In fact, such a service is already available (Non-Patent Document 2, "docomo" (a registered trademark)).

However, the smartphone also incurs monthly usage fee, and for an ordinary household, the smartphone is not a device that can be easily bought for the child. In a survey conducted of the guardians by the applicant of the present application, answers to the question "When do you plan to buy a mobile phone for your child?" were as follows, and the total percentage of "By the time the child has entered an elementary school", "By the time the child is in higher grades of the elementary school", and "By the time the child graduates from the elementary school" was as low as 10%.

### [Result of Survey]

By the time the child has entered an elementary school 0.9%
By the time the child is in higher grades of the elementary school 4.9%
By the time the child graduates from the elementary school 4.2%
After the child has entered a lower secondary school 23.1%
After the child has entered a high school 34.0%
After the child has entered a college 2.7%
Child shall buy his / her smartphone 5.5%
Other 1.6%
Haven't thought about it 23.0%

In other words, when the aim is to keep a watch on a child who is in the sixth grade of the elementary school or lower, it can be said that the system that assumes that the child is carrying the smartphone is not suitable.

Moreover, for example, even when the aim is to keep a watch on elderly persons who may wander off, because of risks of misplacing and losing, or failure due to falling, it is difficult to make them carry an expensive smartphone.

### [Citation List]

### [Patent Document]

Patent Document 1: Japanese Patent Application Laid-Open No. 2004-46458

### [Non-Patent Document]

Non-Patent Document 1: "Mimamorume, Commuting to and from school email service page", [online], Hanshin Electric Railway Co., Ltd., [As searched on April 21, 2014], Internet <URL: http://hanshin-anshin.jp/whats/commute.html>
Non-Patent Document 2: "DOCOMO corporate site (docomo Business Online), Simple position information services page", [online], NTT DOCOMO, INC., [As searched on April 21, 2014], Internet <URL: http://www.docomo.biz/html/service/kantanichi/>

### [Summary of Invention]

### [Technical Problem]

The problem to be solved by the present invention is that, conventionally, a position information notification system capable of keeping watch on the movement of a ward without having to give an expensive terminal equipped with a GPS function to the ward has not been proposed.

The term "keeping watch on the movement of the ward" not only means to notify the information at any location such as whether the ward arrived at a destination, or has departed from the destination, but also means that the guardian is able to check from time to time the position information of a plurality of locations present on the way between the home and the destination.

### [Means for Solving Problems]

To achieve the above object, a position information notification system according to one aspect of the present invention includes a short-range wireless communication device that includes identification information but does not include position information, a base station terminal that is capable of acquiring position information from a signal of a GPS satellite, and a management server in which information transmitted by the base station terminal is registered, wherein the base station terminal includes
a search means that searches the short-range wireless communication device that is capable of communicating and determines whether the device is detected, and
a detection time means that is executed when the short-range wireless communication device is detected by the search means; and
the detection time means includes
an identification information acquiring means that acquires the identification information from the short-range wireless communication device that is in communicable state with the base station terminal;
a position information acquiring means that acquires the position information from the signal of the GPS satellite; and
a transmitting means that transmits detection time data that includes at least the respective information acquired from the identification information acquiring means and the position information acquiring means to the management server.

### [Advantageous Effect of Invention]

In the present invention, when the search means executed at the base station terminals detects a short-range wireless communication terminal of the ward near a base station terminal, a detection time means is executed in the base station terminal. The detection time means acquires, in addition to acquiring identification information from a short-range wireless communication device that is in communicable state, the position information based on a signal from a GPS satellite, and transmits the position information of a ward to a management server.

Therefore, according to the present invention, the guardian does not need to give expensive devices such as the smartphone to the ward, and can keep a watch on the movement of the ward just by making the ward carry the short-range wireless communication terminal that can be purchased at a low cost.

### [Brief Description of Drawings]

FIG. 1 is a view explaining a configuration of a system according to the present invention.
FIG. 2 is a flowchart showing main processes performed in the present invention.
FIG. 3 is a view explaining an overview of a service that uses a position information notification system according to the present invention.
FIG. 4A is a schematic diagram of a position information tracking service that uses the present invention, FIG. 4B is a schematic diagram of a designated area notification service that uses the present invention, and FIG. 4C is a schematic diagram of a straying prevention alarm service that uses the present invention.
FIGS. 5A to 5C show graphical images of screen displayed on a smartphone on which a guardian has viewed information registered in a management server.
FIG. 6 is a view showing an embodiment in which a beacon terminal for high accuracy position detection is combined.
FIG. 7 is a view showing an embodiment in which, upon detecting position information, for example, at base station terminals present at three locations within a predetermined time, the position information is converted to more accurate position information on a server side.
FIG. 8 is a view explaining optional function of the present invention, where FIGS. 8A and 8B show scenarios in which a base station terminal is a stationary PC, or a smartphone that a sales person of a shop located on a route to the school carries, and FIG. 8C shows a scenario where a base station terminal is a smartphone used for keeping a watch that accompanies a ward.

### [Best Modes for Carrying Out the Invention]

In a position information notification system according to the present invention, when a Bluetooth terminal ("Bluetooth" is a registered trademark) that uses only a button battery as the power source and is capable of operating for at least a year or more is used as a short-range wireless communication device, power efficiency is improved, and running cost required for the device to be carried by a ward can be further reduced. Moreover, when the Bluetooth terminal is used, cumbersome daily activity of charging is not required, and frequency of problems such as inability to communicate due to forgetting to charge the battery (discharged battery) reduces considerably.

Specifically, if a Bluetooth 4.0-compliant short-range wireless communication device is used, such a device operates more than a year with one button battery. Bluetooth 4. 0 is the standard for wireless communication, also referred to as "Bluetooth Low Energy", and is preferred in the present invention because of its considerable superiority in low power consumption without affecting the communication speed. In the explanation below, the Bluetooth 4.0-compliant short-range wireless communication device is referred to as a "BLE terminal".

### Embodiments

The position information notification system according to the present invention is explained in detail below based on exemplary embodiments. In the present embodiment, a system that includes, for example, a function that allows a guardian to acquire position information of an elementary school child, who attends a cram school, at any time by using a smartphone of a guardian, a function that notifies a smartphone of a guardian that a ward has passed through a specific area via email, and the like.

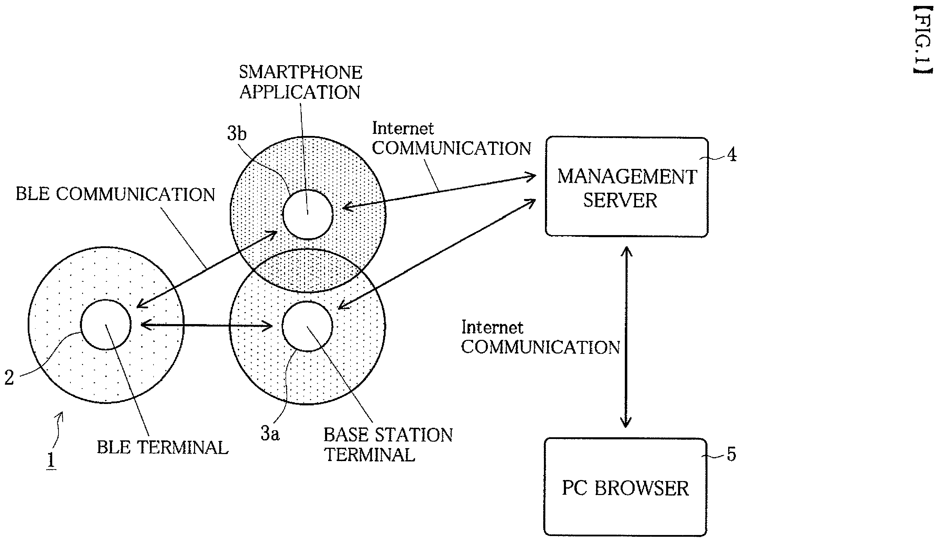

FIG. 1 is a view showing an overall configuration of a position information notification system 1 according to the present embodiment. In the present embodiment, a BLE terminal 2 is used as a short-range wireless communication terminal.

Student number data for identifying the child is recorded as identification information in the BLE terminal 2. However, the BLE terminal 2 has no function that detects the position information based on a GPS signal. Such a BLE terminal 2 can be provided at a cost of, for example, about JPY 2000. In the present embodiment, it is assumed that every child who goes to the cram school in which this system has been installed caries such a BLE terminal 2.

A reference number 3a indicates a personal computer that is used as an example of the base station terminal. Such a personal computer 3a, which is the base station terminal, is installed in the classrooms of schools, public facilities, shops, and ordinary households located on a route to the school. The personal computer 3a includes a function that acquires position information based on a signal from the GPS satellite.

Moreover, in the present invention, as the base station terminal, for example, a smartphone 3b or a tablet-type mobile terminal can be used. Each of these devices is capable of acquiring the position information by using the GPS function.

A wireless communication based on Bluetooth 4.0 standard is used between the BLE terminal 2 and the base station terminals 3a and 3b. The base station terminals 3a and 3b can detect the BLE terminal 2 when, for example, the BLE terminal 2 is within a radius of 20 meters or less from the base station terminal.

A reference number 4 indicates a management server in which information transmitted from the personal computer 3a or the smartphone 3b acting as the base station terminal is registered. The information registered in the management server 4 can be viewed from a browser terminal 5 such as a personal computer or a smartphone of the guardian.

The communication performed between each of the base station terminals 3a and 3b and the management server 4, and the communication performed between the management server 4 and the browser terminal 5 of the guardian are a so-called Internet communication.

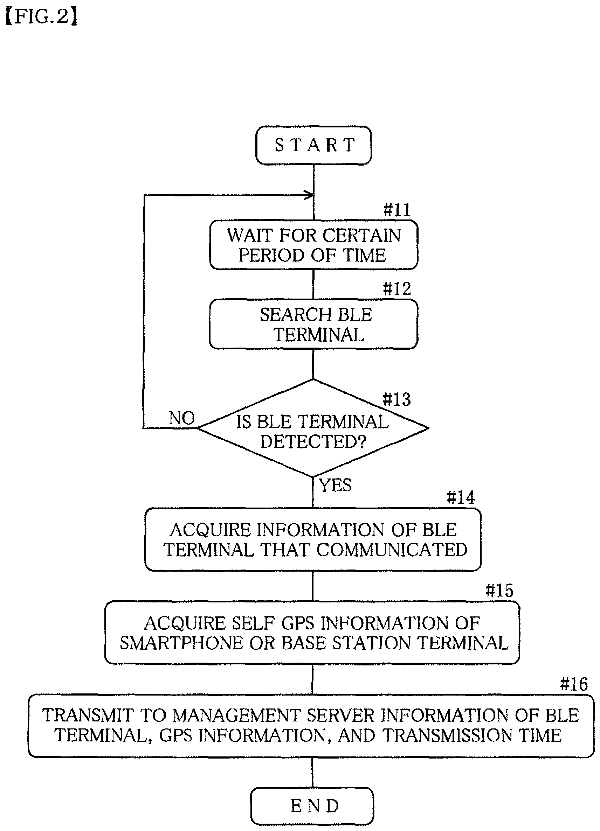

Next, referring to a flowchart of FIG. 2, main processes performed in the present invention are explained. In the following explanation, "#??" corresponds to the corresponding step number in FIG. 2.

The base station terminals 3a and 3b search, after waiting for a certain period of time (for example, 5 minutes) (#11), whether a communicable BLE terminal 2 is present in their area (#12), and then determine whether the BLE terminal 2 is detected (#13).

If the base station terminals 3a and 3b have not detected the BLE terminal 2 even after executing a search means constituted by three steps explained above (#11 to #13), the base station terminals 3a and 3b once again execute the search means (#11 to #13) as shown with an arrow for "NO" in FIG. 2.

On the other hand, when the base station terminals 3a and 3b detect the BLE terminal 2 upon executing the search means (#11 to #13), the base station terminals 3a and 3b execute a detection time means (#14 to #16) explained below as shown with an arrow for "YES" in FIG. 2.

Specifically, the detection time means includes an identification information acquiring means (#14) that acquires identification information (student number data) from the BLE terminal 2 that is detected by the base station terminal 3a and 3b at the search means (#11 to #13) and is in communicable state with the base station terminals 3a and 3b, a position information acquiring means (#15) that acquires position information of itself (the base station terminals 3a and 3b) based on the signal from the GPS satellite, and a transmitting means (#16) that transmits to the management server 4 detection time data that includes at least the respective information acquired from the identification information acquiring means (#14), and the position information acquiring means (#15). Time data of when the transmitting means (#16) is executed can be added to the detection time data.

In this manner, when the search means (#11 to #13) and the detection time means (#14 to #16) are executed, the position information (the detection time data) of the ward is registered in the management server 4. The guardian views the position information (the detection time data) by using the browser terminal 5.

The position information of the ward viewed by the guardian using the browser terminal 5 is, precisely, data indicating the position of the base station terminals 3a and 3b that have detected the BLE terminal 2. At the most, at that point, because the BLE terminal 2 carried by the ward is present within the radius of 20 meters or less from the base station terminals 3a and 3b, the position information of the ward that is viewed by the guardian using the browser terminal 5 can be said to be almost accurate data indicating the position of the ward with an error of less than 20 meters.

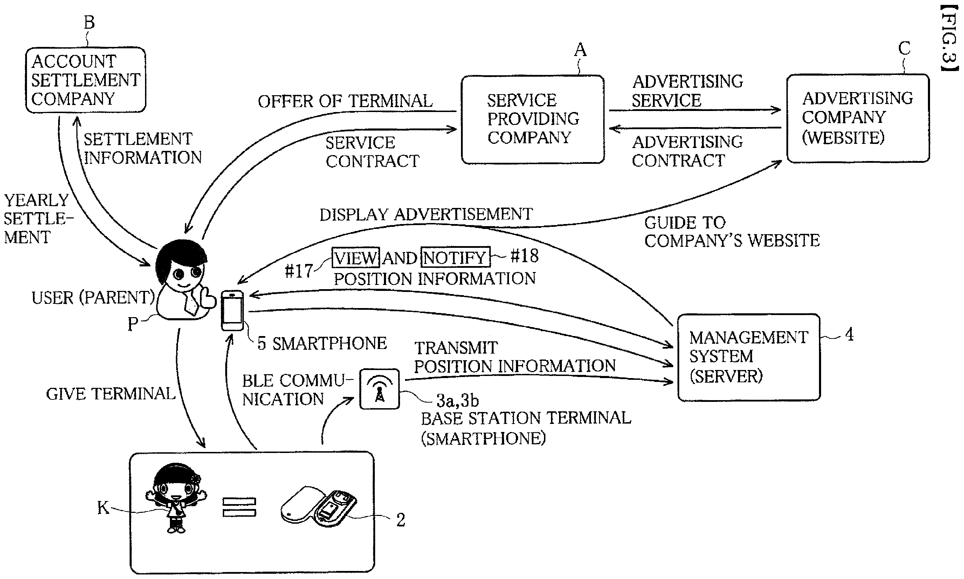

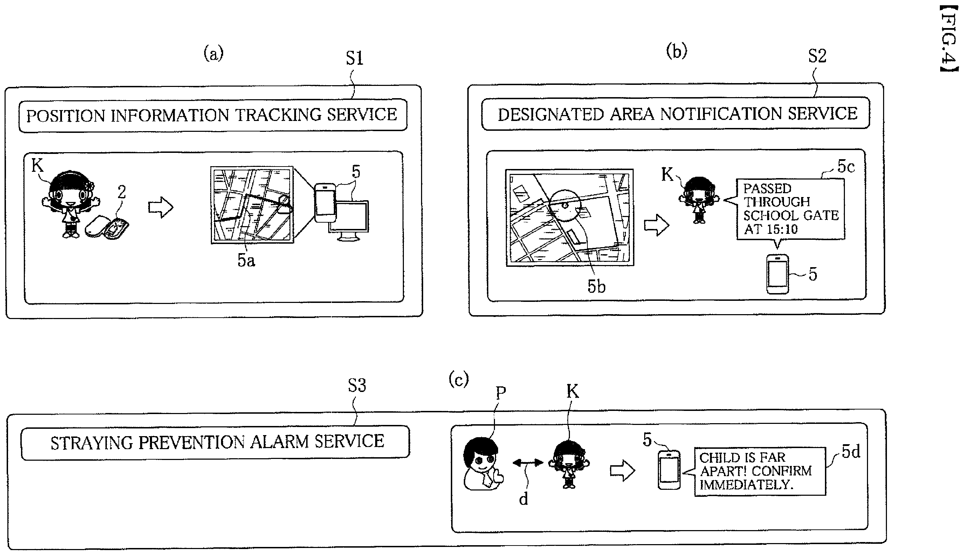

Next, referring to FIGS. 3, and 4A to 4C, overview of services that can be provided by use of the position information notification system according to the present invention is explained. In the following explanation, "#??" corresponds to the corresponding step number in FIG. 3.

For example, as shown in FIG. 3, a service providing company A signs a service contract with a parent P, who is a user, and sells the BLE terminal 2 to the parent P at a low cost.

The service providing company A arranges, before starting the service that is provided by using the system of the present embodiment, as many base station terminals (for example, the personal computer 3a or the smartphone 3b) as possible such that a plurality of the base station terminals is installed or present in advance along the route to a destination so that the ward (for example, a child K), who is moving toward the destination (for example, the cram school or the school), is detected at a desired location.

The parent P gives one BLE terminal 2 to one child K, and pays yearly usage fees of the service, BLE terminal 2 fees, and the like to an account settlement company B.

Once the payment is made, when the child K that is carrying the BLE terminal 2 is near the base station terminals 3a, 3b, the position information of the child K is registered in the management server 4. Accordingly, just by viewing the management server 4 from the parent P's smartphone 5 at any time, the position information of the child K who is commuting to and from the cram school or the school can be checked as a movement history.

In other words, the position information notification system of the present embodiment includes:
the short-range wireless communication device (the BLE terminal 2) carried by the ward (the child K) who is moving;
a terminal for guardian (smartphone 5) that is carried by the guardian (parent P) of the ward via which the guardian can view the detection time data (data such as student ID number, position information of the child, and time transmitted by the transmitting means #16) registered in the management server 4; and
the base station terminals (the personal computer 3a or the smartphone 3b) arranged such that the plurality of the base station terminals is installed or present in advance along the route to the destination so that the ward, who is moving toward the destination, is detected at a desired location, and
the position information notification system further includes a movement history viewing means (#17) in which the detection time data can be viewed as the movement history of the ward by the guardian by accessing the management server 4 via the terminal for guardian 5.

FIG. 4A is a schematic diagram of "position information tracking service" S1 realized by using the movement history viewing means (#17). By using this service, because the movement of the ward K who is carrying the BLE terminal 2 can be confirmed as a movement history 5a displayed on a map in chronological order from the terminal for guardian 5, it is possible to respond promptly even in the case of emergency.

Moreover, in the present invention, by adding an email sending function to the management server 4, when the child K is detected by specified base station terminals 3a and 3b set in advance, the detection time data registered in the management server 4 can be transmitted to the smartphone 5 of the parent P via an email.

In other words, the position information notification system of the present embodiment includes:
the short-range wireless communication device (the BLE terminal 2) carried by the ward (the child K) who is moving;
the terminal for guardian (smartphone 5) that is carried by the guardian (parent P) of the ward via which the guardian can view the detection time data (data such as the student ID number, the position information of the child, and the time transmitted by the transmitting means #16) registered in the management server 4; and
the base station terminals (the personal computer 3a or the smartphone 3b) arranged such that the plurality of the base station terminals is installed or present in advance along the route to the destination so that the ward, who is moving toward the destination, is detected at a desired location, and
the position information notification system further includes a designated area notifying means (#18) that transmits the detection time data to the terminal for guardian 5 via email when the short-range wireless communication device 2 carried by the ward is detected by the specified base station terminals 3a and 3b set in advance.

FIG. 4B is a schematic diagram of "designated area notification service" S2 realized by using the designated area notifying means (#18). By using this service, without using the browser, the guardian can know that the ward K has passed through a specified location 5b when the terminal for guardian 5 receives an email 5c, resulting in improved user-friendliness.

The service providing company A can provide a function realized by using the movement history viewing means (#17) or the designated area notifying means (#18) to the parent P by charging a fee. However, in order to further differentiate from the expensive systems that are offered by mobile phone companies and the like, it is possible to provide such core service to the parent P free of charge.

If the service is to be provided free of charge, as shown in FIG. 3, the service providing company A can make profit by entering into an advertising contract with an advertising company C. In such a case, an advertisement of the advertising company C is displayed on the smartphone 5 of the parent P. When the parent P interested in the content shown in the advertisement views the website of the advertising company C, sale of the products endorsed by the advertising company C is promoted.

Moreover, the present invention can further include an alarm means whereby when the ward is a child or an elderly person, the terminal for guardian (smartphone 5) performs a wireless communication all time with the specific short-range wireless communication device (BLE terminal 2) carried by the ward (child K), and when the specific short-range wireless communication device cannot be detected, notification of the possibility of the ward getting lost or wandering is transmitted to the terminal for guardian via email.

FIG. 4C is a schematic diagram of "straying prevention alarm service" S3 realized by using the alarm means explained above. When this service is used, when the parent P and the child K are far apart at a distance d, and the communication is lost, a warning email 5d is transmitted to the smartphone 5 of the parent P. With this configuration, straying can be prevented, resulting in improved added value of the short-range wireless communication terminal.

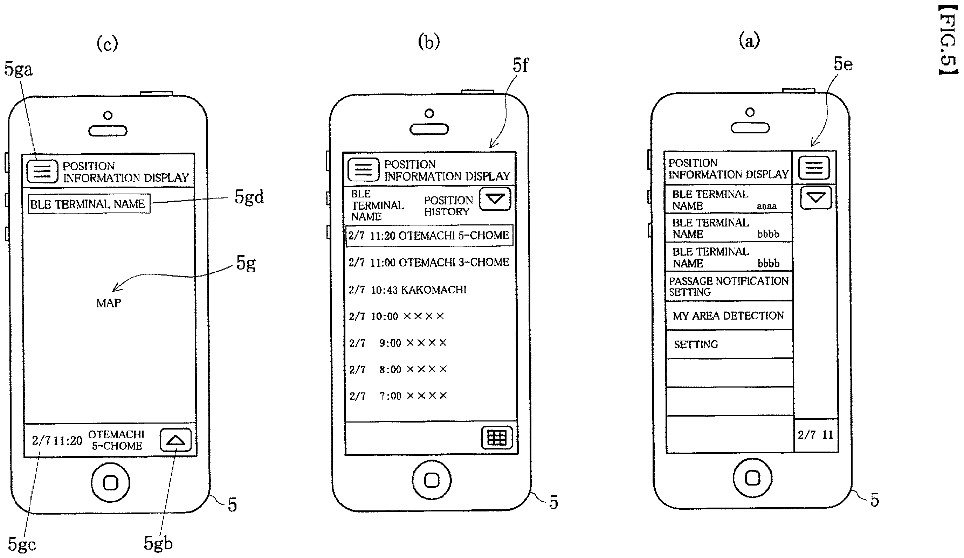

FIGS. 5A to 5C show graphical images of screens displayed on the guardian's smartphone 5 when the detection time data that is registered in the management server 4 is being viewed. FIG. 5A shows a screen of a menu list, FIG. 5B shows a screen of a position history list, and FIG. 5C shows a screen of a map view.

The guardian performs in advance, by using a menu list 5e shown in FIG. 5A, settings of the BLE terminal name, and a specific base station terminal in the designated area notification service. Moreover, the guardian who uses the position information tracking system can confirm, by viewing a position history list 5f in FIG. 5B, the movement history of the ward, in other words, can confirm when the ward passed through which address in a list format.

Moreover, when the guardian touches a particular location in the position information history at a specific time, as shown in FIG. 5C, a map 5g corresponding to the address is displayed. Therefore, the guardian can get the information such as what kind of facilities or buildings are located in the surrounding area of the road that the ward is walking down. A reference number 5ga indicates an icon for returning to the menu list 5e, and a reference number 5gb indicates an icon for returning to the position history list 5f. Moreover, Position information 5gc selected by the guardian is displayed at the bottom of the map 5g, and name of the BLE terminal 5gd is displayed at the top.

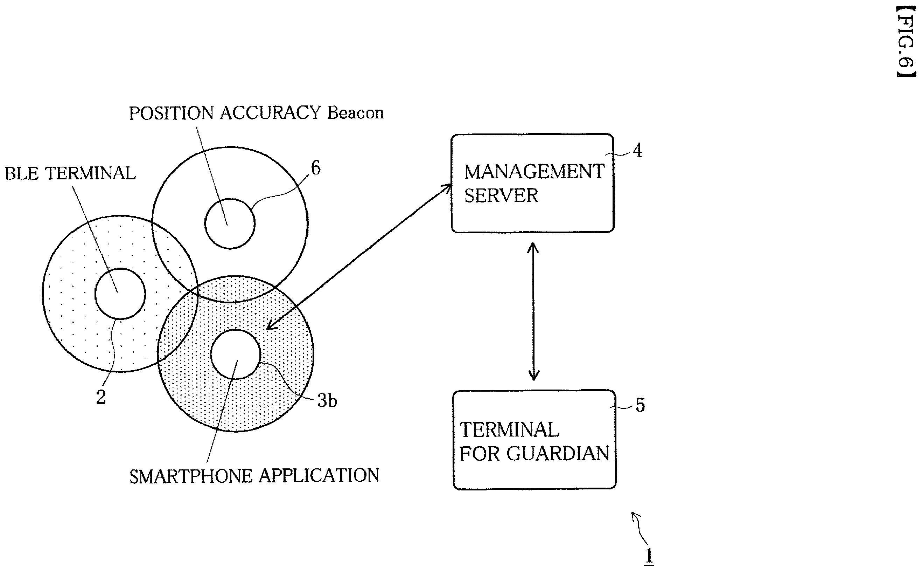

FIG. 6 is a view of an embodiment that assumes usage in buildings having two or more floors such as shopping centers. In this embodiment, a beacon terminal for detecting high accuracy position is combined. In the embodiment shown in FIG. 1, based on the assumption that the BLE terminal 2 carried by the ward is present within the radius of 20 meters or less from the base station terminal 3b, the position information that is registered in the management server 4 and is viewed by the guardian by using the browser terminal 5 is considered to be data indicating the position of the ward with an error of less than 20 meters. However, if the child is lost, for example, in a shopping center having two or more floors it can be detected at an accuracy level of 20 meters whether the child is in the shopping center, but the shop and the floor where the child is cannot be detected.

In such a case, in places, for example, shopping centers and the like where the child may get lost easily, in addition to the base station terminal 3b, for example, a beacon terminal 6 capable of specifying the position information with high accuracy of 3 to 5 meters is installed. The base station terminal 3b transmits, upon detecting a signal from the beacon terminal 6 at the same time as or within a predetermined period of, for example, few seconds after detecting the BLE terminal 2, the signal from the beacon terminal 6 along with GPS information of the base station terminal 3b to the management server 4.

The management server 4 registers, when the data transmitted from the base station terminal 3b includes not only the identification information of the BLE terminal 2, the GPS information of the base station terminal 3b, but also the signal of the beacon terminal 6, the data as higher accuracy position information in a recording device of the management server. The higher accuracy position information is, for example, not only the information of the address of the shopping center, but also a helpful location information that has been identified up to a level such as a toy section on the fifth floor of the same address. With such a configuration, the guardian can more accurately find out the position of the child by viewing the terminal 5.

In other words, the system of the present embodiment further includes:
the beacon terminal 6 capable of identifying the position information with a higher accuracy than the base station terminal 3b,
   wherein
in the base station terminal 3b, when the search means detects a signal from the beacon terminal 6 along with the short-range wireless communication device 2 that is capable of communicating, the transmitting means also transmits the signal from the beacon terminal 6 along with the position information of the short-range wireless communication device 2 to the management server 4, and
the management server 4 converts and records in the recording device of the management server 4, when data transmitted from a desired base station terminal 3b also includes the signal from the beacon terminal 6, the data into higher accuracy position information based on the signal from the beacon terminal 6.

The present invention is not limited to the embodiments explained above, and each embodiment can be modified suitably as long as the modifications are within the scope of the technical concepts explained in each of the claims.

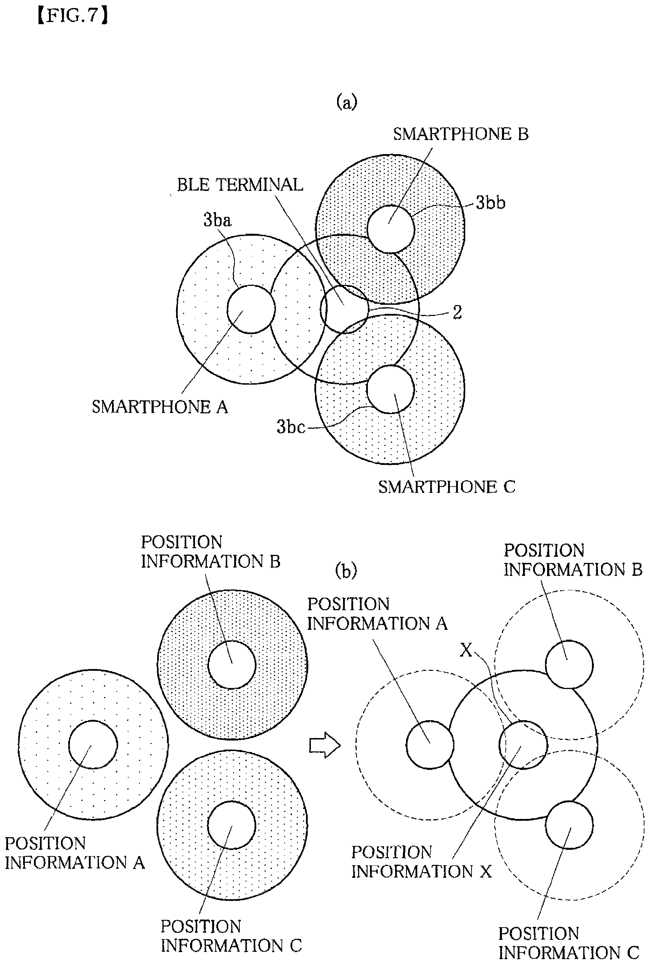

For example, in the embodiments explained above, as shown in FIG. 7A, when the BLE terminal 2 is detected by base station terminals 3ba, 3bb, and 3bc, the management server 4 simply records each information transmitted from the base station terminals 3ba, 3bb, and 3bc. However, if the information from the base station terminals 3ba, 3bb, and 3bc is transmitted almost at the same time, or is recorded within a predetermined period of time, as shown in FIG. 7A, it is assumed on the management server 4 that the BLE terminal 2 is present at a location X that is approximately equidistant from three detection locations, and thus a process to convert the information into position information with higher accuracy can be added.

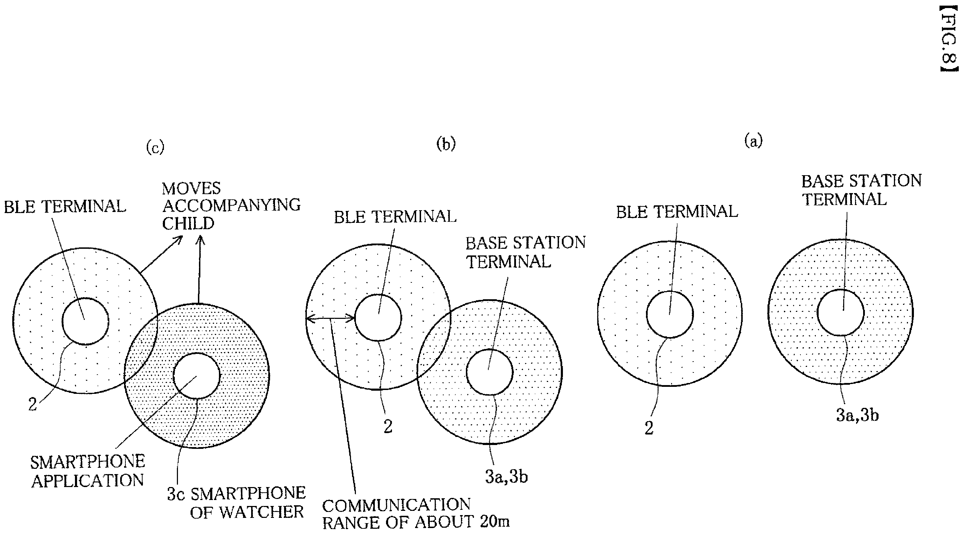

Moreover, in the embodiments explained above, because the base station terminal, for example, is a stationary personal computer 3a or the smartphone 3b of a sales person in a shop located on the route to the school, and it is explained that, from the state of no communication as shown in FIG. 8A, as shown in FIG. 8B, when the ward who is carrying the BLE terminal 2 is within 20 meters or less from the base station terminals 3a and 3b, the detection time means (#14 to #16) is executed in a base station terminal 3. However, in the present invention, in addition to the basic functions explained above, for example, when a watcher accompanies children going to a baseball or soccer match, and the like, as shown in FIG. 8C, a function that can set a smartphone 3c carried by the watcher who accompanies the ward as the base station terminal 3 can be provided as per necessity.

In such a configuration, in the management server 4, a notifying means that notifies the terminal for guardian 5 carried by the guardian via email that the ward is near the watcher is executed at every predetermined time or time interval.

Moreover, when the email reaches the terminal for guardian 5 at the predetermined time or time period, it can be considered that the child of the guardian is near the watcher who is carrying the smartphone 3c.

Therefore, when the optional function such as explained above is used, differing from the school or the cram school that is located in town, keeping watch on the child who is going to an event site or a ground where venue is not definite, and in most case, is located in suburbs where the number of base station terminals could be insufficient is possible.

### [Explanation of Reference Numerals]

- 1: Position information notification system
- 2: Short-range wireless communication device (BLE terminal)
- 3a: Base station terminal (Personal computer)
- 3b: Base station terminal (Smartphone)
- 3c: Base station terminal (Smartphone for watcher)
- 4: Management server
- 5: Terminal for guardian
- 6: Beacon terminal
- #11 to #13: Search means
- #14 to #16: Detection time means
- #14: Identification information acquiring means
- #15: Position information acquiring means
- #16: Transmitting means
- #17: Movement history viewing means
- #18: Designated area notifying means
- K: Ward
- P: Guardian

## Claims

1. A position information notification system comprising a short-range wireless communication device that includes identification information but does not include position information, a base station terminal that is capable of acquiring position information from a signal of a GPS satellite, and a management server in which information transmitted by the base station terminal is registered, wherein
the base station terminal includes
a search means that searches the short-range wireless communication device that is capable of communicating and determines whether the device is detected, and
a detection time means that is executed when the short-range wireless communication device is detected by the search means; and
the detection time means includes
an identification information acquiring means that acquires the identification information from the short-range wireless communication device that is in communicable state with the base station terminal;
a position information acquiring means that acquires the position information from the signal of the GPS satellite; and
a transmitting means that transmits detection time data that includes at least the respective information acquired from the identification information acquiring means and the position information acquiring means to the management server.

2. The position information notification system as claimed in claim 1, wherein the short-range wireless communication device is a Bluetooth terminal that uses only a button battery as a power source and is capable of operating for at least a year or more.

3. The position information notification system as claimed in claim 1 or 2 comprising:
the short-range wireless communication device to be carried by a ward who is moving;
a terminal for guardian that is to be carried by a guardian of the ward, and that enables viewing of the detection time data registered in the management server; and
the base station terminals that are arranged such that a plurality of the base station terminals is installed or present in advance along a route to a destination so that the ward, who is moving toward the destination, can be detected at a desired location, and
the position information notification system further includes a movement history viewing means that enables, when the ward accesses the management server using the terminal for guardian at the required time, viewing of the detection time data as a movement history of the ward.

4. The position information notification system as claimed in claim 1 or 2 comprising:
the short-range wireless communication device to be carried by a ward who is moving;
a terminal for guardian that is to be carried by a guardian of the ward, and that enables viewing of the detection time data registered in the management server; and
the base station terminals that are arranged such that the plurality of the base station terminals is installed or present in advance along a route to a destination so that the ward, who is moving toward the destination, can be detected at a desired location, and
the position information notification system further includes a designated area notifying means that transmits, when the short-range wireless communication device carried by the ward is detected by a specific base station terminal that is set in advance, the detection time data via email to the terminal for guardian.

5. The position information notification system as claimed in claim 3 or 4, wherein the base station terminal is a smartphone carried by a watcher who is moving with the ward, and
the position information notification system further includes a notifying means that notifies the terminal for guardian carried by the guardian that the ward is around the watcher via email for each predetermined time or time period.

6. The position information notification system as claimed in any one of claims 3 to 5, wherein
the ward is a child or an elderly person, and
the terminal for guardian performs a wireless communication all time with a specific short-range wireless communication device carried by the ward, and
the position information notification system further includes an alarm means that notifies, when the specific short-range wireless communication device cannot be detected, the terminal for guardian via email of the possibility of the ward straying or wandering.

7. The position information notification system as claimed in any one of claims 1 to 6 further comprising:
a beacon terminal that is capable of identifying position information with a higher accuracy than the base station terminal, wherein
in the base station terminal, when the search means detects a signal from the beacon terminal along with the short-range wireless communication device capable of communicating, the transmitting means also transmits the signal from the beacon terminal to the management server; and
the management server converts, when the data transmitted from the base station terminal also includes the signal from the beacon terminal, the data into a higher accuracy position information based on the corresponding signal.
